# EUROPÄISCHE PATENTANMELDUNG

(11) **EP 1 650 463 A1**
(43) Veröffentlichungstag der Anmeldung: **26.04.2006**
(21) Anmeldenummer: 04105245.7
(22) Anmeldetag: 22.10.2004
(51) Int. Cl.: F16D 65/14, F16D 51/00, F16D 55/22

(54) **Bremsvorrichtung und Verfahren zur Betätigung einer Bremsvorrichtung**

(71) Anmelder: Ford Global Technologies, LLC, A subsidary of Ford Motor Company, Dearborn, MI 48126 (US)
(72) Erfinder: Figura, Michael Georg, 41542, Dormagen (DE); Kluge, Torsten, 51491, Overath (DE)
(74) Vertreter: Drömer, Hans-Carsten

(57) **Zusammenfassung**

Die Erfindung betrifft eine Bremsvorrichtung (1), insbesondere zur Verwendung in einem Kraftfahrzeug, die einen mit einem Bremsbelag (3a,3b) versehenen Träger (4) und ein als Reibpartner für den Bremsbelag dienendes Bremsreibelement (5) aufweist, wobei eine Betätigungsvorrichtung vorgesehen ist, mit der der Bremsbelag (3a,3b) mittels eines Aktuators (2a,2b) mit dem Bremsreibelement (5) in Eingriff bringbar ist, so daß die Bremsvorrichtung (1) zwischen einer Arbeitsposition, in der sich der Bremsbelag (3a,3b) und das Bremsreibelement (5) miteinander in Eingriff befinden, und einer Ruheposition, in der der Bremsbelag (3a,3b) und das Bremsreibelement (5) voneinander getrennt sind, schaltbar ist.

Das Weiteren betrifft die Erfindung ein Verfahren zur Betätigung einer derartigen Bremsvorrichtung (1).

Der Aktuator umfaßt mindestens einen künstlichen Muskel (2a,2b) durch dessen Aktivierung die Bremsvorrichtung (1) zwischen der Arbeitsposition und der Ruheposition schaltbar ist.

Die Krafterzeugung in bekannten künstlichen Muskeln kann z.B. auf elektrostatischen Anziehungskräften, auf dem piezoelektrischen Effekt, auf einer Ultraschallerzeugung, auf einem Formgedächtnis von Materialen, auf einem Ionenaustausch, auf einer Streckung von Kohlenstoff-Nanoröhrchen und/oder auf der Einlagerung von Wasserstoff in Metallhydride beruhen.

## Beschreibung

Die Erfindung betrifft eine Bremsvorrichtung, insbesondere zur Verwendung in einem Kraftfahrzeug, die einen mit einem Bremsbelag versehenen Träger und ein als Reibpartner für den Bremsbelag dienendes Bremsreibelement aufweist, wobei eine Betätigungsvorrichtung vorgesehen ist, mit der der Bremsbelag mittels eines Aktuators mit dem Bremsreibelement in Eingriff bringbar ist, so daß die Bremsvorrichtung zwischen einer Arbeitsposition, in der sich der Bremsbelag und das Bremsreibelement miteinander in Eingriff befinden, und einer Ruheposition, in der der Bremsbelag und das Bremsreibelement voneinander getrennt sind, schaltbar ist.

Des Weiteren betrifft die Erfindung ein Verfahren zur Betätigung einer Bremsvorrichtung, die einen mit einem Bremsbelag versehenen Träger und ein als Reibpartner für den Bremsbelag dienendes Bremsreibelement aufweist, wobei durch Betätigung eines Aktuators der Bremsbelag und das Bremsreibelement miteinander in Eingriff gebracht bzw. voneinander getrennt werden, so daß die Bremsvorrichtung von einer Arbeitsposition, in der sich der Bremsbelag und das Bremsreibelement miteinander in Eingriff befinden, in eine Ruheposition, in der der Bremsbelag und das Bremsreibelement voneinander getrennt sind, überführt wird.

Bremsvorrichtungen der oben genannten Art werden nach dem Stand der Technik zur Verzögerung von Kraftfahrzeugen eingesetzt. Dabei wird ein mit einem Bremsbelag versehener Träger mit einem Reibpartner, der sich relativ zum Träger bewegt, in Eingriff gebracht, wobei die kinetische Energie des Fahrzeuges durch die in der Kontaktzone generierten Reibungskräfte in Wärme umgewandelt wird.

Grundsätzlich kann dabei hinsichtlich der Bauweise bzw. Bauart zwischen einer Scheibenbremse und einer Trommelbremse unterschieden werden.

Eine Scheibenbremse, wie sie beispielsweise in der deutschen Offenlegungsschrift DE 103 05 702 A1 beschrieben wird, verfügt über eine Bremsscheibe, die mit dem Fahrzeugrad bzw. -reifen umläuft und als Bremsreibelement im Sinne der vorliegenden Erfindung dient, und einen feststehenden, die Bremsscheibe übergreifenden Bremssattel, der den Bremsbelag aufnimmt und somit als Träger im Sinne der vorliegenden Erfindung fungiert. Zur Einleitung des Bremsvorganges wird der Bremsbelag mittels einer Betätigungsvorrichtung bzw. mittels eines Aktuators von außen auf die Bremsscheibe gedrückt.

Im Rahmen der vorliegenden Erfindung wird allgemein von einem Bremsbelag gesprochen, wobei dies nicht bedeutet, daß es sich um einen einteiligen d.h. zusammenhängenden Belag handeln muß, sondern durchaus an mehreren und verschiedenen Stellen des Trägers ein Bremsbelag vorgesehen werden kann.

Eine Trommelbremse, wie sie beispielsweise Gegenstand der deutschen Offenlegungsschrift DE 102 42 231 A1 ist, verfügt über eine Bremstrommel, die mit dem Fahrzeugrad bzw. -reifen umläuft und als Bremsreibelement im Sinne der vorliegenden Erfindung dient, und zwei nicht mit dem Rad umlaufende, in der Bremstrommel angeordnete Bremsbacken, die den Bremsbelag aufnehmen und einen Träger im Sinne der vorliegenden Erfindung darstellen. Die Bremsbeläge werden mit der Bremstrommel mittels einer Betätigungsvorrichtung bzw. mittels eines Aktuators in Eingriff gebracht, wobei die Bremsbacken nach außen gedrückt werden.

Nachteilig an den aus dem Stand der Technik bekannten Bremsvorrichtungen sind die Betätigungsvorrichtungen, die sehr komplex und daher kostenintensiv und störanfällig sind. Dabei können Scheibenbremsen beispielsweise elektromotorisch betätigt werden oder auch druckluftbetätigt sein. Trommelbremsen, die häufig auch als Feststellbremsen eingesetzt werden, weisen häufig sogar noch mechanische Betätigungsvorrichtungen, beispielsweise in Form eines Seilzuges, auf.

Vor diesem Hintergrund ist es die Aufgabe der vorliegenden Erfindung, eine Bremsvorrichtung gemäß dem Oberbegriff des Anspruchs 1 d. h. der gattungsbildenden Art bereitzustellen, die über eine verbesserte Betätigungsvorrichtung verfügt und insbesondere kostengünstiger ist als eine herkömmliche Bremsvorrichtung.

Eine weitere Teilaufgabe der vorliegenden Erfindung ist es, ein Verfahren zur Betätigung einer Bremsvorrichtung aufzuzeigen.

Gelöst wird die erste Teilaufgabe durch eine Bremsvorrichtung, insbesondere zur Verwendung in einem Kraftfahrzeug, die einen mit einem Bremsbelag versehenen Träger und ein als Reibpartner für den Bremsbelag dienendes Bremsreibelement aufweist, wobei eine Betätigungsvorrichtung vorgesehen ist, mit der der Bremsbelag mittels eines Aktuators mit dem Bremsreibelement in Eingriff bringbar ist, so daß die Bremsvorrichtung zwischen einer Arbeitsposition, in der sich der Bremsbelag und das Bremsreibelement miteinander in Eingriff befinden, und einer Ruheposition, in der der Bremsbelag und das Bremsreibelement voneinander getrennt sind, schaltbar ist, und die dadurch gekennzeichnet ist, daß der Aktuator mindestens einen künstlichen Muskel umfaßt, durch dessen Aktivierung die Bremsvorrichtung zwischen der Arbeitsposition und der Ruheposition schaltbar ist.

Künstliche Muskeln sind Aktuatoren, welche in ihren Eigenschaften der natürlichen Muskulatur ähneln bzw. nachgebildet sind. Charakteristisch für künstliche Muskeln ist insbesondere eine im Volumen stattfindende Krafterzeugung aufgrund atomarer oder molekularer Wechselwirkungen. Häufig bestehen künstliche Muskeln - ähnlich wie natürliche Muskeln - aus einem gestaltveränderlichen, weichen Material.

Die Krafterzeugung in bekannten künstlichen Muskeln kann z. B. auf elektrostatischen Anziehungskräften, auf dem piezoelektrischen Effekt, auf einer Ultraschallerzeugung, auf einem Formgedächtnis von Materialien, auf einem lonenaustausch, auf einer Streckung von Kohlenstoff-Nanoröhrchen und/oder auf der Einlagerung von Wasserstoff in Metallhydride beruhen.

Je nach Wirkungsprinzip können künstliche Muskeln aus Polymeren, insbesondere Polymer-Gelen, aus ferroelektrischen Substanzen, aus Silizium, aus Legierungen mit einem Formgedächtnis oder dergleichen hergestellt sein. Eine detaillierte Beschreibung verschiedener Arten künstlicher Muskeln ist z. B. in der EP 0 924 033 A2, der US 2002/0026794 A1, der US 6 109 852 und ähnlicher Patentliteratur zu finden. Darüber hinaus sind Beispiele künstlicher Muskeln in Publikationen der einschlägigen Forschungsinstitute beschrieben (z. B. Max-Planck-Institut für Festkörperforschung in Stuttgart; Abteilung für künstliche Intelligenz des MIT, Massachusetts, USA).

Durch die erfindungsgemäße Verwendung eines künstlichen Muskels zur Ausbildung des Aktuators kann eine Bremsvorrichtung bereitgestellt werden, die im Vergleich zu herkömmlichen Bremsvorrichtungen weniger komplex und kostengünstiger ist, da ihre Betätigungsvorrichtung nur wenige Bauteile umfaßt und einen geringen Raumbedarf aufweist, wobei eine Betätigung des Aktuators durch Aktivierung bzw. Deaktivierung des mindestens einen künstlichen Muskels beispielsweise mittels elektrischer Signale erfolgt. Stellmotoren sind nicht erforderlich. Die Betätigungsvorrichtung weist ein vergleichsweise geringes Eigengewicht auf, da das Material, aus dem künstliche Muskeln ausgebildet sind, von geringerem spezifischen Gewicht ist.

Darüber hinaus kann der mindestens eine künstliche Muskel gleichzeitig als Träger für den Bremsbelag fungieren und vollständig in die Bremsvorrichtung integriert werden, wie weiter unten noch erläutert werden wird.

Durch die Verwendung eines künstlichen Muskels zur Ausbildung der Bremsvorrichtung bzw. des Aktuators wird somit die erste der Erfindung zugrunde liegende Aufgabe gelöst, nämlich eine Bremsvorrichtung bereitzustellen, die über eine verbesserte Betätigungsvorrichtung verfügt und insbesondere kostengünstiger ist als eine herkömmliche Bremsvorrichtung.

Weitere vorteilhafte Ausführungsformen der Bremsvorrichtung werden im Zusammenhang mit den Unteransprüchen erörtert.

Vorteilhaft sind Ausführungsformen der Bremsvorrichtung, bei denen das Bremsreibelement eine Bremsscheibe ist. Damit kann die erfindungsgemäße Bremsvorrichtung in der Bauweise einer Scheibenbremse ausgebildet werden, was die Generierung ausreichend hoher Bremsmomente ermöglicht. Dabei wird der Bremsbelag vorzugsweise und möglichst weit beabstandet vom Drehpunkt bzw. von der Drehachse der umlaufenen Bremsscheibe angeordnet, damit die Reibkraft bzw. Bremskräfte mit den sich einstellenden Hebeln möglichst große Bremsmomente erzeugen, wenn der Bremsbelag sich mit der Bremsscheibe in Eingriff befindet. Grundsätzlich sind auch Ausführungsformen möglich, bei denen die Bremsscheibe als Reibpartner feststeht d. h. als Stator fungiert und der Belag zusammen mit dem Träger rotiert.

Vorteilhaft sind bei der Verwendung einer Bremsscheibe als Bremsreibelement bzw. Reibpartner Ausführungsformen der Bremsvorrichtung, bei denen der Träger ein die Bremsscheibe übergreifender Bremssattel ist, wobei mindestens auf einer der beiden der Bremsscheibe zugewandten Innenseiten des Bremssattels ein künstlicher Muskel zwischen Bremssattel und Bremsbelag vorgesehen ist.

Günstig ist bei dieser Ausführungsform, daß der Bremsbelag und die Bremsscheibe auf vorteilhafte Weise miteinander in Eingriff gebracht werden können, indem der Bremsbelag durch eine translatorische Verschiebung, in der Regel in Richtung der Drehachse der Bremsscheibe, großflächig mit der Bremsscheibe zur Anlage gebracht wird, wobei eine möglichst gute Anschmiegung zwischen Bremsbelag und Bremsscheibe angestrebt und erzielt wird. Dies ermöglicht zudem eine günstige Krafteinleitung und die Erzeugung ausreichend hoher Anpreßkräfte d.h. Normalkräfte zur Generierung großer Reibkräfte bzw. Reibmomente. Das Verhältnis von Betätigungskraft und Bremskraft ist günstig.

Vorteilhaft sind bei der Verwendung einer Bremsscheibe als Bremsreibelement bzw. Reibpartner auch Ausführungsformen der Bremsvorrichtung, bei denen der Träger ein die Bremsscheibe übergreifender Bremssattel ist und auf beiden der Bremsscheibe zugewandten Innenseiten des Bremssattels ein künstlicher Muskel zwischen Bremssattel und Bremsbelag vorgesehen ist.

Im Gegensatz zu der zuvor beschriebenen Ausführungsform kann dabei durch die beidseitige Anordnung des Bremsbelags eine größere Bremskraft aufgrund der vergrößerten Reibfläche erzeugt werden. Zudem sorgt die beidseitige Anordnung des Bremsbelags dafür, daß die Bremsscheibe keinen Querkräften ausgesetzt ist, und daher keiner Biegebeanspruchung unterworfen wird.

Vorteilhaft sind aber auch Ausführungsformen der Bremsvorrichtung, bei denen das Bremsreibelement eine Bremstrommel bzw. ein Bremstrommelsegment ist. Dadurch kann die erfindungsgemäße Bremsvorrichtung in der Bauweise einer Trommelbremse ausgebildet werden, mit der ebenfalls große Reibkrafthebel und große Bremsmomente bereitgestellt werden.

Im Gegensatz zu der zuvor beschriebenen Scheibenbremse sind dabei die die Reibkräfte hervorrufenden Normalkräfte bzw. Anpreßkräfte quer zu Drehachse des umlaufenden Reibpartners d. h. der rotierenden Bremstrommel ausgerichtet. Grundsätzlich sind auch hier Ausführungsformen möglich, bei denen die Bremstrommel als Stator fungiert und der Belag zusammen mit dem Träger rotiert.

Vorteilhaft sind dabei Ausführungsformen der Bremsvorrichtung, bei denen der Träger zweiteilig ausgebildet ist und zwei Bremsbacken umfaßt, die in der Bremstrommel bzw. in dem Bremstrommelsegment angeordnet sind. Die Bremsbacken sind ringförmig angeordnet und werden zur Einleitung des Bremsvorganges nach dem Stand der Technik auseinandergedrückt und auf diese Weise nach außen bewegt. Der erfindungemäß unter Verwendung mindestens eines künstlichen Muskels ausgebildete Aktuator kann einerseits für dieses Verschieben bzw. Auseinanderdrücken der Bremsbacken genutzt werden und damit gemäß dem herkömmlichen Verfahren zur Herstellung des Reibkontaktes genutzt werden.

Andererseits eröffnet die erfindungsgemäße Bremsvorrichtung auch die Möglichkeit, daß die Bremsbacken als solche feststehend, also unbeweglich in der Bremsvorrichtung angeordnet werden und mittels des Aktuators bzw. des mindestens einen künstlichen Muskels lediglich der Bremsbelag zur Einleitung des Bremsvorganges bzw. der Herstellung des Reibkontaktes eine Lageveränderung erfährt. Dadurch wird die Lagerung der Bremsbacken vereinfacht und die Kinematik der Bremsvorrichtung weniger komplex und weniger aufwendig in der konstruktiven Umsetzung.

Vorteilhaft sind daher Ausführungsformen der Bremsvorrichtung, bei denen zwischen der der Bremstrommel zugewandten Außenseite der Bremsbacke und dem Bremsbelag ein künstlicher Muskel vorgesehen ist. Dies ermöglicht - wie bereits erwähnt - die Verschiebung des Bremsbelags bei feststehenden Bremsbacken.

Vorteilhaft sind Ausführungsformen der Bremsvorrichtung, bei denen der mindestens eine künstliche Muskel und der Bremsbelag einteilig ausgebildet sind. Einteilig bedeutet, daß der Bremsbelag und der mindestens eine künstliche Muskel unlösbar miteinander verbunden sind, was durch eine kraftschlüssige, stoffschlüssige oder formschlüssige Verbindung erzielt werden kann.

Vorteilhaft sind dabei Ausführungsformen der Bremsvorrichtung, bei denen der Bremsbelag Teil des mindestens einen künstlichen Muskels ist. Wird ein geeigneter Werkstoff zur Herstellung des mindestens einen künstlichen Muskels verwendet, der neben seiner Fähigkeit, durch Aktivierung bzw. Deaktivierung seine äußere Gestalt ändern zu können, auch über die erforderlichen Eigenschaften eines Bremsbelags verfügt, können Bremsbelag und künstlicher Muskel in einem Bauteil vereinigt bzw. zusammengefaßt werden. Erwähnenswert ist in diesem Zusammenhang, daß einige Werkstoffe zur Herstellung künstlicher Muskeln eine hohe Hitzebeständigkeit aufweisen, was sie für diese Ausführungsform prädestiniert.

Des Weiteren können Verbundwerkstoffe zielführend sein, bei denen mehrere Werkstoffe kombiniert werden. Hierbei kann zur Erzeugung hoher Kräfte und zur Ausbildung des künstlichen Muskels ein erster Werkstoff und zur Herstellung des Bremsbelags ein auf der Außenseite angeordneter zweiter Werkstoff eingesetzt werden, wobei eine Werkstoffauswahl entsprechend der Funktion erfolgt.

Vorteilhaft sind Ausführungsformen der Bremsvorrichtung, bei denen der mindestens eine künstliche Muskel bei Aktivierung expandiert und auf diese Weise die Bremsvorrichtung betätigt. Diese Ausführungsform eignet sich für eine Ausgestaltung der Bremsvorrichtung, bei der sich die Bremsvorrichtung bei aktiviertem, expandiertem Muskel in der Arbeitsposition befindet und der Bremsbelag und das Bremsreibelement miteinander in Eingriff stehen. Bei deaktiviertem Muskel befindet sich die Bremsvorrichtung in der Ruheposition, in der der Bremsbelag und das Bremsreibelement voneinander getrennt sind.

Vorteilhaft sind Ausführungsformen der Bremsvorrichtung, bei denen der mindestens eine künstliche Muskel bei Aktivierung kontrahiert und auf diese Weise die Bremsvorrichtung betätigt. Im Gegensatz zu der zuvor beschriebenen Ausführungsform wird die Ruheposition durch Aktivierung des mindestens einen künstlichen Muskels herbeigeführt. Zur Einleitung des Bremsvorganges wird der mindestens eine künstliche Muskel deaktiviert. Diese Ausführungsform eignet sich daher insbesondere zur Ausbildung einer Feststellbremse, mit der beispielsweise ein parkendes Fahrzeug gesichert werden kann. Dabei erweist es sich als vorteilhaft, daß der Bremsbelag sich mit dem Bremsreibelement in Eingriff befindet, wenn der mindestens eine künstliche Muskel deaktiviert ist, sich also im abgeschalteten Zustand befindet und daher keine Steuerungssignale oder dergleichen zur Sicherung des Fahrzeugs erforderlich sind.

Vorteilhaft ist diese Ausführungsform des weiteren unter Sicherheitsaspekten, denn bei Versagen oder Ausfallen der Betätigungsvorrichtung bzw. des mindestens einen künstlichen Muskels wird das Fahrzeug gebremst und zum Stillstand gebracht.

Vorteilhaft sind auch Ausführungsformen der Bremsvorrichtung, bei denen der mindestens eine künstliche Muskel bei Aktivierung seine äußere Form ändert und auf diese Weise die Bremsvorrichtung betätigt.

Vorteilhaft sind Ausführungsformen der Bremsvorrichtung, bei denen der mindestens eine künstliche Muskel Kohlenstoff-Nanoröhrchen umfaßt. Derartige künstliche Muskelelemente zeichnen sich durch ihre hohe Hitzebeständigkeit bis zu 1000°C aus, weshalb sie sich in außerordentlicher Weise für die Verwendung in einer Bremsvorrichtung, bei der die kinetische Energie des Fahrzeuges in Wärme umgewandelt wird und die daher sehr hohen thermischem Belastungen ausgesetzt ist, eignen. Ferner können derartige Muskelelemente durch elektrische Energie gesteuert werden (vgl. Science vom 21.05.1999), was in einfacher Weise durch die Bordbatterie erfolgen kann. Bei Aktivierung expandieren Kohlenstoff-Nanoröhrchen.

Kohlenstoff-Nanoröhrchen können in papierähnlichen Mehrschichtstrukturen gebündelt werden und erlauben eine erhebliche Krümmung der gesamten Muskelstruktur. Sie zeichnen sich ferner durch ein geringes Verhältnis von Expansion zu Kontraktion aus, was als vorteilhaft anzusehen ist.

Vorteilhaft sind aber auch Ausführungsformen der Bremsvorrichtung, bei denen der mindestens eine künstliche Muskel mindestens ein Polymergel umfaßt. Künstliche Muskeln auf der Basis von Polymer-Hydrogelen können durch elektrische Signale gesteuert werden und kontrahieren bei Aktivierung (vgl. Low, L. W.; Madou, M. J. "Microactuators towards microvalves for controlled drug delivery", Sensors and Actuators B: Chemical, 67 (1-2) (2000) pp. 149-160).

Hinsichtlich der beiden zuletzt genannten Ausführungsformen wird zudem Bezug genommen auf die zuvor gemachten Ausführungsformen, bei denen künstliche Muskeln verwendet werden, die bei Aktivierung expandieren bzw. sich zusammenziehen.
Grundsätzlich können aber auch künstliche Muskeln zum Einsatz kommen, die sowohl eine aktive Kontraktion als auch Expansion erlauben d. h. künstliche Muskeln, die durch geeignete Aktivierung expandieren und sich bei einer andersartigen Aktivierung zusammenziehen.

Vorteilhaft sind Ausführungsformen der Bremsvorrichtung, bei denen der mindestens eine künstliche Muskel mindestens einen Formgedächtniswerkstoff umfaßt.

Formgedächtniswerkstoffe an sich - sogenannte shape memory materials oder shape memory alloys - sind seit mehr als fünfzig Jahren bekannt. Sie besitzen die Fähigkeit, ihre äußere Gestalt in Abhängigkeit von der Temperatur, von der magnetischen Feldstärke oder von dem hydraulischen Druck, dem sie ausgesetzt sind, oder dergleichen zu ändern. Unter die Formgedächtniswerkstoffe werden im Rahmen der vorliegenden Erfindung sämtliche Werkstoffe subsumiert, die über ein Formgedächtnis verfügen, insbesondere die Formgedächtnislegierungen wie NiTi (Nitinol), Fe-Pt, Cu-Al-Ni, Fe-Pd, Fe-Ni, Cu-Zn-Al, CuAlMn, aber auch Keramiken mit Formgedächtnis, wie beispielsweise Ce-TZP-Keramik.

Beispielsweise kann eine aus einem länglichen Draht geformte Büroklammer ihre Gestalt in der Art ändern, daß die Büroklammer - in einen Topf mit heißem Wasser gelegt - mit steigender Temperatur und bei Erreichen einer sogenannten Übergangstemperatur T' in ihre ursprüngliche Form übergeht d. h. die Gestalt eines länglichen Drahtes annimmt. Sie ändert dabei ihre äußere Gestalt oder - mit anderen Worten gesagt - ihre strukturelle Konfiguration.

Ist dieser Transformationsprozeß umkehrbar, so handelt es sich bei dem Formgedächtniswerkstoff um einen sogenannten Zwei-Weg-Formgedächtniswerkstoff, andernfalls um einen Ein-Weg-Formgedächtniswerkstoff.

Folglich könnte der oben beschriebene Übergang der Büroklammer zu einem länglichen Draht bei geeigneter Auswahl eines Zwei-Weg-Formgedächtniswerkstoffes rückgängig gemacht werden. Hierzu wird die Temperatur abgesenkt, wobei der Draht sich bei Unterschreiten einer Übergangstemperatur T" zu einer Büroklammer umformt. Die Aktivierung durch Temperaturveränderung soll nur als Beispiel verstanden werden. Für den vorliegenden Fall - einer unter Verwendung von Formgedächtniswerkstoffen hergestellten Bremsvorrichtung - ist die Aktivierung mittels elektrischer Signale eher geeignet.

Die Ausbildung einer erfindungsgemäßen Bremsvorrichtung erfordert prinzipbedingt einen Zwei -Weg-Formgedächtniswerkstoff, so daß die Bremsvorrichtung zwischen einer Arbeitsposition und einer Ruheposition wechseln kann.

Vorteilhaft sind Ausführungsformen der Bremsvorrichtung, bei denen der mindestens eine künstliche Muskel elektrisch steuerbar ist. Insbesondere kann dabei die vom Muskelelement erzeugte mechanische Energie aus der elektrischen Energie des Signals stammen. Elektrisch gesteuerte künstliche Muskelelemente haben den Vorteil, daß diese mit der üblichen Steuerungstechnik einer Brennkraftmaschine kompatibel sind.

Vorteilhaft sind Ausführungsformen der Bremsvorrichtung, bei denen der mindestens eine künstliche Muskel stufenweise steuerbar ist, insbesondere zweistufig schaltbar ist. Eine derartige Ausbildung des Aktuators der Bremsvorrichtung erleichtert die Steuerung, insbesondere wenn der künstliche Muskel gemäß einer Ein-AusSchaltung funktioniert d. h. lediglich von einem deaktivierten Zustand - Ruheposition - in einen aktivierten Zustand - Arbeitsposition - wechselt und umgekehrt. Komplexe Kennfelder müssen bei dieser Ausführungsform nicht generiert und bereitgestellt werden, wie dies beispielsweise bei stufenlos steuerbaren künstlichen Muskelelementen bzw. Aktuatoren erforderlich ist.

Vorteilhaft sind aber unter anderen Gesichtpunkten auch Ausführungsformen der Bremsvorrichtung, bei denen der mindestens eine künstliche Muskel stufenlos steuerbar ist. Dies gestattet eine größere Vielfalt und Flexibilität bei der Generierung und Steuerung der Bremskräfte, insbesondere eine kontinuierliche Erhöhung bzw. Erniedrigung der Bremskraft und damit ein kontrolliertes Bremsen.

Die zweite der Erfindung zugrunde liegende Teilaufgabe wird gelöst durch ein Verfahren zur Betätigung einer Bremsvorrichtung, die einen mit einem Bremsbelag versehenen Träger und ein als Reibpartner für den Bremsbelag dienendes Bremsreibelement aufweist, wobei durch Betätigung eines Aktuators der Bremsbelag und das Bremsreibelement miteinander in Eingriff gebracht bzw. voneinander getrennt werden, so daß die Bremsvorrichtung von einer Arbeitsposition, in der sich der Bremsbelag und das Bremsreibelement miteinander in Eingriff befinden, in eine Ruheposition, in der der Bremsbelag und das Bremsreibelement voneinander getrennt sind, überführt wird, und das dadurch gekennzeichnet ist, daß ein Aktuator verwendet wird, der mindestens einen künstlichen Muskel umfaßt, durch dessen Aktivierung die Bremsvorrichtung betätigt wird, so daß die Bremsvorrichtung von der Arbeitsposition in die Ruheposition überführt wird.

Wie bereits bei der Beschreibung der erfindungsgemäßen Bremsvorrichtung zum Ausdruck gekommen ist, kann eine Betätigung in der Aktivierung oder Deaktivierung des mindestens einen künstlichen Muskels bestehen. Das bereits für die erfindungsgemäße Bremsvorrichtung Gesagte gilt auch für das erfindungsgemäße Verfahren.

Vorteilhaft sind Ausführungsformen des Verfahrens, bei denen der mindestens eine künstliche Muskel elektrisch aktiviert d. h. gesteuert wird. Dies erleichtert die Aktivierung des künstlichen Muskels aufgrund bereits an der Brennkraftmaschine bzw. im Fahrzeug vorhandener Systeme. Die Aktivierung kann mittels der Motorsteuerung und der Bordbatterie realisiert werden.

Vorteilhaft sind Ausführungsformen des Verfahrens, bei denen die in der Arbeitsposition zwischen dem Bremsbelag und dem Bremsreibelement generierte Bremskraft in der Größe mittels des mindestens einen künstlichen Muskels gesteuert wird, was einen zumindest mehrstufig, vorzugsweise stufenlos, steuerbaren bzw. verstellbaren Muskel erfordert.

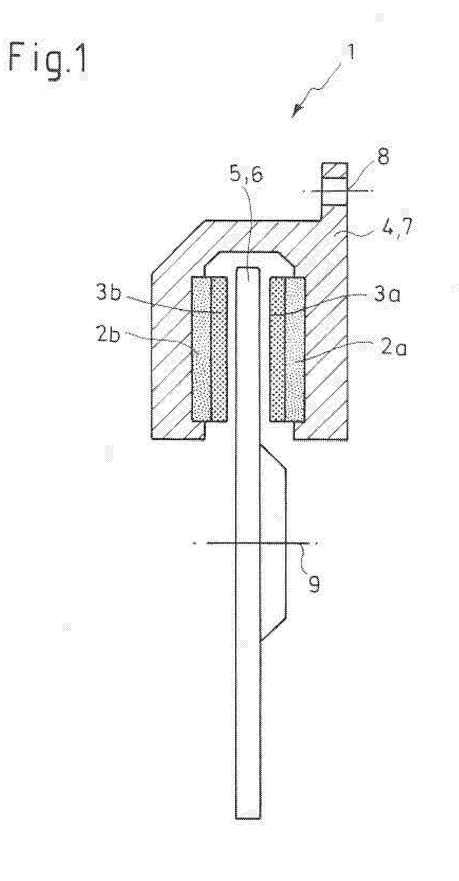

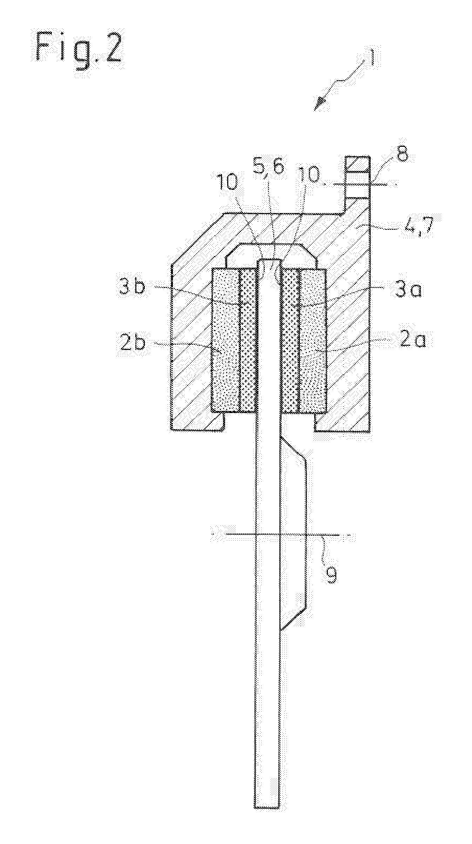

Im folgenden wird die Erfindung anhand eines Ausführungsbeispieles gemäß den Figuren 1 und 2 näher beschrieben. Hierbei zeigt:
- Fig.1: schematisch im Querschnitt eine erste Ausführungsform der Bremsvorrichtung in der Ruheposition, und
- Fig. 2: schematisch im Querschnitt die in Figur 1 dargestellte Ausführungsform der Bremsvorrichtung in der Arbeitsposition.

Figur 1 zeigt schematisch im Querschnitt eine erste Ausführungsform der Bremsvorrichtung 1 in der Ruheposition.

Die Bremsvorrichtung 1 verfügt über einen als Bremssattel 7 ausgebildeten Träger 4, der mit einem Bremsbelag 3a, 3b versehen ist, und ein als Bremsscheibe 6 ausgeführtes Bremsreibelement 5, das als Reibpartner für den Bremsbelag 3a, 3b dient. Der Bremssattel 7 übergreift die Bremsscheibe 6, wobei auf beiden Innenseiten des Bremssattels 7, die der Bremsscheibe 6 zugewandt sind, ein künstlicher Muskel 2a, 2b zwischen Bremssattel 7 und Bremsbelag 3a, 3b vorgesehen ist.

Damit ist die Bremsvorrichtung 1 in der Bauweise einer Scheibenbremse ausgebildet, was die Generierung ausreichend hoher Bremsmomente ermöglicht. Der Bremssattel 7 ist feststehend ausgeführt d. h. der Sattel 7 fungiert als Stator und ist hierzu mit einer Bohrung 8 versehen, mit der der Sattel 7 ortsfest gelagert und fixiert wird. Die Bremsscheibe 6 rotiert um die Drehachse 9 und damit relativ zu dem Bremssattel 7 bzw. dem Bremsbelag 3a, 3b.

Um große Hebel zu realisieren, ist der Bremsbelag 3a, 3b weit beabstandet von der Drehachse 9 der umlaufenen Bremsscheibe 6 angeordnet, damit die Bremskräfte zusammen mit den Hebeln möglichst große Bremsmomente erzeugen, wenn der Bremsbelag 3a, 3b mit der Bremsscheibe 6 in Eingriff gebracht wird (siehe Figur 2).

Dadurch, daß auf beiden Seiten der Bremsscheibe 6 Bremsbeläge 3a, 3b vorgesehen sind, wird die Bremsscheibe 6 während des Bremsvorganges keinen Querkräften ausgesetzt und daher keiner Biegebeanspruchung unterworfen. Die beidseitige Anordnung des Bremsbelags 3a, 3b hat des weiteren den Vorteil, daß eine größere Bremskraft aufgrund der vergrößerten Reibfläche erzeugt werden kann.

In der in Figur 1 dargestellten Ruheposition sind der Bremsbelag 3a, 3b und die als Bremsreibelement 5 dienende Bremsscheibe 6 voneinander getrennt.

Figur 2 zeigt schematisch im Querschnitt die in Figur 1 dargestellte Ausführungsform der Bremsvorrichtung 1 in der Arbeitsposition. Es sollen nur die Unterschiede zu der in Figur 1 dargestellten Ruheposition erörtert werden, weshalb im übrigen bezug genommen wird auf Figur 1. Für dieselben Bauteile wurden dieselben Bezugszeichen verwendet.

In der Arbeitsposition befinden sich der Bremsbelag 3a, 3b und die Bremsscheibe 6 miteinander in Eingriff, wobei in der Kontaktzone 10 die für den Bremsvorgang erforderlichen Reibkräfte infolge der Relativbewegung von Bremsscheibe 6 und Bremsbelag 3a, 3b erzeugt werden.

Um die Bremsvorrichtung 1 von der Ruheposition (Figur 1) in die Arbeitsposition (Figur 2) zu überführen, ist eine Betätigungsvorrichtung erforderlich, die erfindungsgemäß einen Aktuator umfaßt, der unter Verwendung mindestens eines künstlichen Muskels 2a, 2b ausgebildet wird. Dabei wird der Bremsbelag 3a, 3b durch eine translatorische Verschiebung in Richtung der Drehachse 9 der Bremsscheibe 6 mit der Bremsscheibe 6 zur Anlage gebracht, wobei eine möglichst gute Anschmiegung zwischen Bremsbelag 3a, 3b und Bremsscheibe 6 angestrebt wird.

Durch Aktivierung bzw. Deaktivierung der beiden künstlichen Muskeln 2a, 2b wird der Bremsbelag 3a, 3b mit dem Bremsscheibe 6 in Eingriff gebracht, so daß die Bremsvorrichtung 1 von der Ruheposition (Figur 1), in der der Bremsbelag 3a, 3b und die Bremsscheibe 6 voneinander getrennt sind, in die Arbeitsposition (Figur 2), in der sich der Bremsbelag 3a, 3b und die Bremsscheibe 6 miteinander in Eingriff befinden, überführt wird.

Bei Verwendung künstlicher Muskeln 2a, 2b, die bei Aktivierung expandieren und auf diese Weise die Bremsvorrichtung 1 betätigen, befindet sich die Bremsvorrichtung 1 bei aktivierten Muskeln 2a, 2b in der Arbeitsposition (Figur 2) und bei deaktivierten Muskeln 2a, 2b in der Ruheposition (Figur 1).

Bei Verwendung künstlicher Muskeln 2a, 2b, die sich bei Aktivierung zusammenziehen und auf diese Weise die Bremsvorrichtung 1 betätigen, wird die Ruheposition (Figur 1) durch Aktivierung der künstlichen Muskeln 2a, 2b herbeigeführt. Zur Einleitung des Bremsvorganges werden die künstlichen Muskeln 2a, 2b deaktiviert. Diese Ausführungsform eignet sich - wie in der Beschreibung bereits erwähnt - zur Ausbildung einer Feststellbremse und ist unter Sicherheitsaspekten zu bevorzugen, da bei Funktionsstörungen der Bremsvorrichtung 1 - beispielsweise bei Ausfall der Steuerung - die Bremsvorrichtung 1 schließt.

### Bezugszeichen

- 1: Bremsvorrichtung
- 2a: erster künstlicher Muskel
- 2b: zweiter künstlicher Muskel
- 3a: Bremsbelag
- 3b: Bremsbelag
- 4: Träger
- 5: Bremsreibelement
- 6: Bremsscheibe
- 7: Bremssattel
- 8: Bohrung
- 9: Drehachse
- 10: Kontaktzone

## Patentansprüche

1. Bremsvorrichtung (1), insbesondere zur Verwendung in einem Kraftfahrzeug, die einen mit einem Bremsbelag (3a, 3b) versehenen Träger (4) und ein als Reibpartner für den Bremsbelag (3a, 3b) dienendes Bremsreibelement (5) aufweist, wobei eine Betätigungsvorrichtung vorgesehen ist, mit der der Bremsbelag (3a, 3b) mittels eines Aktuators mit dem Bremsreibelement (5) in Eingriff bringbar ist, so daß die Bremsvorrichtung (1) zwischen einer Arbeitsposition, in der sich der Bremsbelag (3a, 3b) und das Bremsreibelement (5) miteinander in Eingriff befinden, und einer Ruheposition, in der der Bremsbelag (3a, 3b) und das Bremsreibelement (5) voneinander getrennt sind, schaltbar ist,
**dadurch gekennzeichnet, daß**
der Aktuator mindestens einen künstlichen Muskel (2a, 2b) umfaßt, durch dessen Aktivierung die Bremsvorrichtung (1) zwischen der Arbeitsposition und der Ruheposition schaltbar ist.

2. Bremsvorrichtung (1) nach Anspruch 1,
**dadurch gekennzeichnet, daß**
das Bremsreibelement (5) eine Bremsscheibe (6) ist.

3. Bremsvorrichtung (1) nach Anspruch 2,
**dadurch gekennzeichnet, daß**
der Träger (4) ein die Bremsscheibe (6) übergreifender Bremssattel (7) ist, wobei mindestens auf einer der beiden der Bremsscheibe (6) zugewandten Innenseiten des Bremssattels (7) ein künstlicher Muskel (2a) zwischen Bremssattel (7) und Bremsbelag (3a) vorgesehen ist.

4. Bremsvorrichtung (1) nach Anspruch 2 oder 3,
**dadurch gekennzeichnet, daß**
der Träger (4) ein die Bremsscheibe (6) übergreifender Bremssattel (7) ist und auf beiden der Bremsscheibe (6) zugewandten Innenseiten des Bremssattels (7) ein künstlicher Muskel (2a, 2b) zwischen Bremssattel (7) und Bremsbelag (3a, 3b) vorgesehen ist.

5. Bremsvorrichtung (1) nach Anspruch 1,
**dadurch gekennzeichnet, daß**
das Bremsreibelement (5) eine Bremstrommel bzw. ein Bremstrommelsegment ist.

6. Bremsvorrichtung (1) nach Anspruch 5,
**dadurch gekennzeichnet, daß**
der Träger (4) zweiteilig ausgebildet ist und zwei Bremsbacken umfaßt, die in der Bremstrommel bzw. in dem Bremstrommelsegment angeordnet sind.

7. Bremsvorrichtung (1) nach Anspruch 5 oder 6,
**dadurch gekennzeichnet, daß**
zwischen der der Bremstrommel zugewandten Außenseite der Bremsbacke und dem Bremsbelag (3a, 3b) ein künstlicher Muskel (2a, 2b) vorgesehen ist.

8. Bremsvorrichtung (1) nach einem der vorherigen Ansprüche,
**dadurch gekennzeichnet, daß**
der mindestens eine künstliche Muskel (2a, 2b) und der Bremsbelag (3a, 3b) einteilig ausgebildet sind.

9. Bremsvorrichtung (1) nach Anspruch 8,
**dadurch gekennzeichnet, daß**
der Bremsbelag (3a, 3b) Teil des mindestens einen künstlichen Muskels (2a, 2b) ist.

10. Bremsvorrichtung (1) nach einem der vorherigen Ansprüche,
**dadurch gekennzeichnet, daß**
der mindestens eine künstliche Muskel (2a, 2b) bei Aktivierung expandiert und auf diese Weise die Bremsvorrichtung (1) betätigt.

11. Bremsvorrichtung (1) nach einem der Ansprüche 1 bis 9,
**dadurch gekennzeichnet, daß**
der mindestens eine künstliche Muskel (2a, 2b) bei Aktivierung kontrahiert und auf diese Weise die Bremsvorrichtung (1) betätigt

12. Bremsvorrichtung (1) nach einem der Ansprüche 1 bis 9,
**dadurch gekennzeichnet, daß**
der mindestens eine künstliche Muskel (2a, 2b) bei Aktivierung seine äußere Form ändert und auf diese Weise die Bremsvorrichtung (1) betätigt

13. Bremsvorrichtung (1) nach einem der Ansprüche 1 bis 10,
**dadurch gekennzeichnet, daß**
der mindestens eine künstliche Muskel (2a, 2b) Kohlenstoff-Nanoröhrchen umfaßt.

14. Bremsvorrichtung (1) nach einem der Ansprüche 1 bis 9 oder 11,
**dadurch gekennzeichnet, daß**
der mindestens eine künstliche Muskel (2a, 2b) mindestens ein Polymergel umfaßt.

15. Bremsvorrichtung (1) nach einem der Ansprüche 1 bis 9 oder 12,
**dadurch gekennzeichnet, daß**
der mindestens eine künstliche Muskel (2a, 2b) mindestens einen Formgedächtniswerkstoff umfaßt.

16. Bremsvorrichtung (1) nach einem der vorherigen Ansprüche,
**dadurch gekennzeichnet, daß**
der mindestens eine künstliche Muskel (2a, 2b) elektrisch steuerbar ist.

17. Bremsvorrichtung (1) nach einem der vorherigen Ansprüche,
**dadurch gekennzeichnet, daß**
der mindestens eine künstliche Muskel (2a, 2b) stufenweise steuerbar ist.

18. Bremsvorrichtung (1) nach Anspruch 17,
**dadurch gekennzeichnet, daß**
der mindestens eine künstliche Muskel (2a, 2b) zweistufig schaltbar ist.

19. Bremsvorrichtung (1) nach einem der Ansprüche 1 bis 16,
**dadurch gekennzeichnet, daß**
der mindestens eine künstliche Muskel (2a, 2b) stufenlos steuerbar ist.

20. Verfahren zur Betätigung einer Bremsvorrichtung (1), die einen mit einem Bremsbelag (3a, 3b) versehenen Träger (4) und ein als Reibpartner für den Bremsbelag (3a, 3b) dienendes Bremsreibelement (5) aufweist, wobei durch Betätigung eines Aktuators der Bremsbelag (3a, 3b) und das Bremsreibelement (5) miteinander in Eingriff gebracht bzw. voneinander getrennt werden, so daß die Bremsvorrichtung (1) von einer Arbeitsposition, in der sich der Bremsbelag (3a, 3b) und das Bremsreibelement (5) miteinander in Eingriff befinden, in eine Ruheposition, in der der Bremsbelag (3a, 3b) und das Bremsreibelement (5) voneinander getrennt sind, überführt wird,
**dadurch gekennzeichnet, daß**
ein Aktuator verwendet wird, der mindestens einen künstlichen Muskel (2a, 2b) umfaßt, durch dessen Aktivierung die Bremsvorrichtung (1) betätigt wird, so daß die Bremsvorrichtung (1) von der Arbeitsposition in die Ruheposition überführt wird.

21. Verfahren nach Anspruch 20,
**dadurch gekennzeichnet, daß**
der mindestens eine künstliche Muskel (2a, 2b) elektrisch aktiviert d. h. gesteuert wird.

22. Verfahren nach Anspruch 20 oder 21,
**dadurch gekennzeichnet, daß**
die in der Arbeitsposition zwischen dem Bremsbelag (3a, 3b) und dem Bremsreibelement (5) generierte Bremskraft in der Größe mittels des mindestens einen künstlichen Muskels (2a, 2b) gesteuert wird.
